# EUROPÄISCHE PATENTANMELDUNG

(11) **EP 1 752 363 A2**
(43) Veröffentlichungstag der Anmeldung: **14.02.2007**
(21) Anmeldenummer: 06013895.5
(22) Anmeldetag: 05.07.2006
(51) Int. Cl.: B62D 29/00, B62D 65/02

(54) **Verfahren zur Herstellung eines Leichtbau-Rohbauteils**

(30) Priorität: 10.08.2005 DE 102005037688
(71) Anmelder: Bayerische Motoren Werke Aktiengesellschaft, 80809 München (DE)
(72) Erfinder: Zahlauer, Johann, 85304 Ilmmünster (DE); Erdmann, Marc, 81476 München (DE); Holzleitner, Jochen, 84030 Ergolding (DE)

(57) **Zusammenfassung**

Verfahren zur Herstellung eines Rohbauteils, insbesondere einer Fahrzeugrohkarosserie, umfassend mehrere Einzelbauteile, darunter wenigstens ein Kunststoff-Metall-Verbundbauteil mit einer ersten metallischen Bauteilkomponente und einer mit dieser kunststofffertigungstechnisch verbundenen zweiten Bauteilkomponente aus Kunststoff, in einem Rohbauprozess, wobei kunststoffspezifische Fertigungsschritte zur Herstellung des wenigstens einen Kunststoff-Metall-Verbundbauteils in den Rohbauprozess integriert sind

## Beschreibung

Die Erfindung betrifft ein Verfahren zur Herstellung eines Rohbauteils, insbesondere einer Fahrzeugrohkarosserie, umfassend mehrere Einzelbauteile, darunter wenigstens ein Kunststoff-Metall-Verbundbauteil mit einer ersten metallischen Bauteilkomponente und einer mit dieser kunststofffertigungstechnisch verbundenen zweiten Bauteilkomponente aus Kunststoff, in einem Rohbauprozess.

Leichtbau und alternative Werkstoffe gewinnen im Kraftfahrzeugbau zunehmend an Bedeutung. In diesem Zusammenhang sind auch Hybridbauteile und deren Herstellung bekannt geworden. Hybridbauteile sind Bauteile, die aus einer Mehrzahl unterschiedlicher Werkstoffe bestehen, insbesondere Kunststoff/Metall-Verbundkörper. Bekannt ist die Herstellung derartiger Bauteile, bei denen ein Blecheinleger mit Kunststoff umspritzt wird, wobei unter "umspritzen" vorliegend auch ein nur teilweises umspritzen oder anspritzen verstanden wird.

Ein derartiges Hybridbauteil ist beispielsweise in der DE 100 02 499 A1 beschrieben, welche ein Frontmodul für ein Kraftfahrzeug betrifft. Das Frontmodul weist einen Stoßfängerquerträger und einen Montageträger auf, die einteilig im Kunststoff-Spritzgussverfahren als Kunststoff-Metall-Verbundbauteil hergestellt sind. Die Herstellung des Kunststoff-Metall-Verbunds erfolgt in einem Spritzgießwerkzeug, wobei Befestigungspunkte zur späteren montageseitigen Verbindung vorgesehen sind. Das Frontmodul wird vormontiert und nachfolgend dem Montageprozess zugeführt.

Bei der bekannten gesonderten Fertigung von Hybridbauteilen sind immer auch gewisse logistische Leistungen erforderlich, um das Hybridbauteil zeitgerecht und in Sequenz dem Rohbauprozess zuzuführen. Es sind Befestigungspunkte zur späteren rohbauseitigen Verbindung vorzusehen. Gegebenenfalls ist die Oberfläche der metallischen Umfänge von Hybridbauteilen vor der Montage gesondert zu behandeln, beispielsweise mittels eines Korrosionsschutzes, wie einer kathodischen Tauchlackierung (KTL) oder Verzinkung.

Aufgabe der vorliegenden Erfindung ist die Verringerung des logistischen Aufwands bei Herstellung eines eingangs genannten Rohbauteils. Ferner sollen zusätzliche Montageschritte und Befestigungspunkte ebenso wie die Notwendigkeit einer gesonderten Oberflächenbehandlung der metallischen Umfänge von Hybridbauteilen vermieden werden.

Die Lösung der Aufgabe erfolgt mit einem Verfahren mit den Merkmalen des Anspruchs 1, wobei gemäß der zugrundeliegenden Idee kunststoffspezifische Fertigungsschritte zur Herstellung des wenigstens einen Kunststoff-Metall-Verbundbauteils in den Rohbauprozess integriert sind. Kunststoff-Metall-Verbunde können auf diese Weise direkt im Rohbau am metallischen Rohbauteil hergestellt werden. Eine gesonderte, örtlich entfernte Herstellung kann entfallen und somit auch die damit verbundenen logistischen Aufwendungen, zusätzliche Montageschritte und Befestigungspunkte sowie einer gesonderte Oberflächenbehandlung von anzubauenden Hybridbauteilen.

Besonders vorteilhafte Weiterbildungen des erfindungsgemäßen Verfahrens sind Gegenstand der Unteransprüche.

In bevorzugter Ausführungsform handelt es sich bei dem kunststoffspezifischen Fertigungsschritt um einen Spritzgieß- oder Pressvorgang, bei welchem die erste Bauteilkomponente des Kunststoff-Metall-Verbundbauteils mit Kunststoff hinterspritzt oder hinterpresst wird. Zweckmäßigerweise ist die Taktzeit der kunststoffspezifischen Fertigungsschritte mit der Taktzeit im Rohbauprozess abgestimmt.

Nachfolgend wird eine besonders zu bevorzugende Weiterbildung des erfindungsgemäßen Verfahrens unter Bezugnahme auf Figuren näher erläutert, dabei zeigen schematisch und beispielhaft
- Figur 1: eine Bodengruppe einer Fahrzeugrohkarosserie,
- Figur 2a: ein Karosseriegerippe einer Fahrzeugrohkarosserie,
- Figur 2b: ein Karosseriegerippe einer Fahrzeugrohkarosserie und
- Figur 3: eine Fahrzeugrohkarosserie mit Anbauteilen.

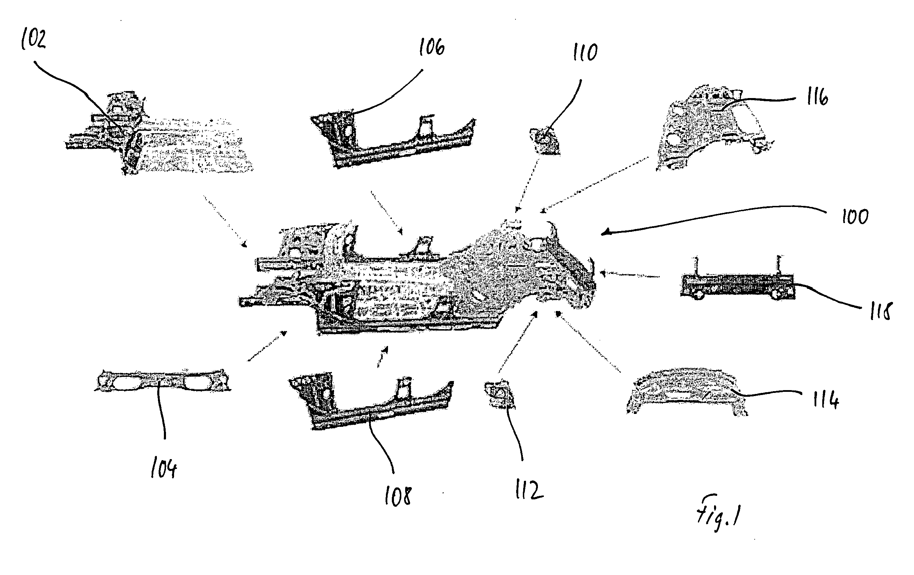

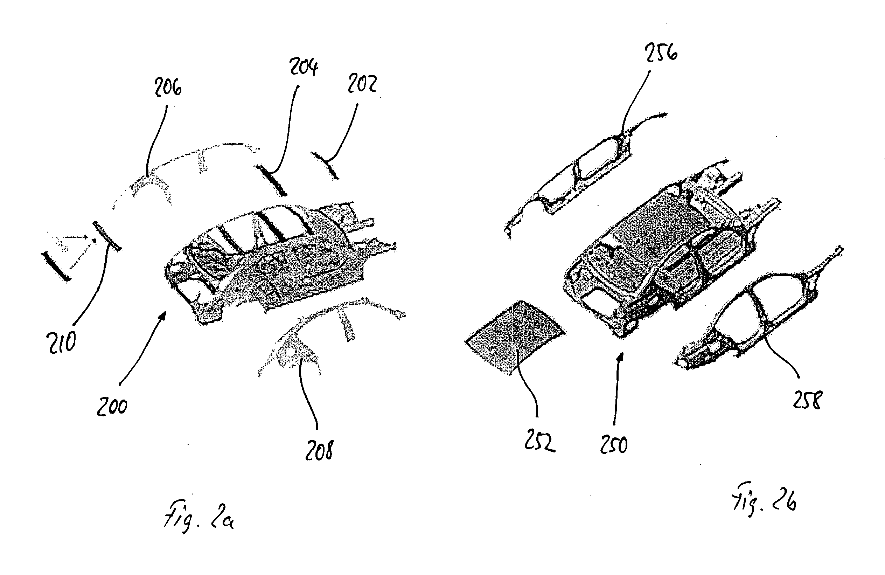

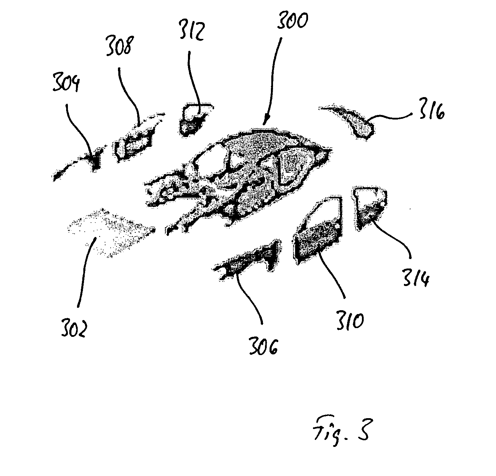

Figur 1 zeigt eine Bodengruppe 100 einer Fahrzeugrohkarosserie, welche einen Vorderbau 102, eine obere Stirnwand 104, seitliche Längsträger 106, 108, aufgesetzte Radhäuser 110, 112, eine Trennwand 114, einen Hinterbau 116 und eine Heckverkleidung 118 umfasst. Nach der Komplettierung der Bodenbaugruppe 100 wird, wie in den Figuren 2a und 2b dargestellt, durch Hinzufügen eines Windlaufs 202, eines Dachspriegels 204, innerer Seitenrahmen 206, 208 und eines oberen Heckfensterrahmens 210 sowie äußerer Seitenrahmen 256, 258 und eines Dachs 252 das Karosseriegerippe 200, 250 vervollständigt. Der Rohbau der Fahrzeugkarosserie 300 schließt, wie in Figur 3 gezeigt, mit der Montage einer Frontklappe 302, Seitenwänden 304, 306, vorderen Türen 308, 310, hinteren Türen 312, 314 und einer Heckklappe 316 ab.

Die Fahrzeugkarosserie umfasst neben üblichen Blechteilen vorliegend auch wenigstens ein Kunststoff-Metall-Verbundbauteil mit einer ersten metallischen Bauteilkomponente und einer mit dieser kunststofffertigungstechnisch verbundenen zweiten Bauteilkomponente aus Kunststoff. Beispielsweise können Teile der Bodengruppe 100, wie der Vorderbau 102 die obere Stirnwand 104, die seitlichen Längsträger 106, 108, die aufgesetzten Radhäuser 110, 112, die Trennwand 114, der Hinterbau 116 und/oder die Heckverkleidung 118 in Hybridbauweise ausgeführt sein. Alternativ oder zusätzlich kann es selbstverständlich auch zweckmäßig sein, wenn Teile des Karosseriegerippes 200, 250 und/oder Fahrzeugkarosserie 300 in Hybridbauweise ausgeführt sind.

Die Herstellung des wenigstens einen Kunststoff-Metall-Verbundbauteils erfolgt vorliegend im Rahmen des Rohbauprozesses unter Anwendung kunststofffertigungstechnischer Verfahren, wie insbesondere Spritzgießen oder Pressen. Im Rohbauprozesses steht das kunststofffertigungstechnischer Verfahren neben den bisher bei der Herstellung von Fahrzeugrohkarosserien üblichen Verfahren wie Schweißen, Lasern, Löten, Kleben, Nieten, Clinchen, Verclipsen etc.

Kunststoffbauteilkomponenten werden im Rohbauprozess mit Metallkomponenten verbunden hergestellt, indem beispielsweise eine mehrteilige Form um eine Metallkomponente geschlossen wird, wobei die Metallkomponente gegebenenfalls nur teilweise in den mit der geschlossenen Form gebildeten Formraum hineinragt. Der Formraum umfasst wenigsten ein Teilbereich einer Metallkomponente sowie einen Hohlraum. Metallkomponente kann entweder an einer Innenwand der Form anliegen oder frei in den Hohlraum hineinragen. Bei der nachfolgenden Befüllung des Formraums, beispielsweise mit schmelzflüssigem Kunststoff, wird die Metallkomponente entsprechend teilweise oder allseitig von die Kunststoffbauteilkomponente bildendem Material umschlossen.

Vorzugsweise werden zur Herstellung einer Kunststoffbauteilkomponente thermoplastische Kunststoffe verwendet, welche gegebenenfalls gefüllt sind, beispielsweise mit Glasfasern oder Kohlefasern. Der verwendete Kunststoff verfestigt sich zweckmäßigerweise besonders schnell und/oder es wird ein kühlbares Formwerkzeug verwendet, so dass besonders kurze, den weiteren Fertigungsschritten im Rohbauprozess angepasste Taktzeiten erreicht werden, wobei wesentlich ist, dass der Kunststoff schnell eine ausreichende Festigkeit zur Weiterbearbeitung des Rohbauteils erreicht, eine vollständige Aushärtung kann gegebenenfalls auch langsamer erfolgen.

Ein Kunststoff zur Bildung einer Kunststoffbauteilkomponente wird beispielsweise mit einer bereits beschichteten Metallkomponente verbunden. Bei der Beschichtung kann es sich um einen Korrosionsschutz, wie kathodische Tauchlackierung (KTL), Pulverbeschichtung, Zinkphosphatierung oder Verzinkung handeln. Gegebenenfalls kann es auch zweckmäßig sein, wenn ein Kunststoff mit einer unbeschichteten Metallkomponente verbunden wird und/oder wenn zwischen Metallkomponente und Kunststoff kraft- oder formschlussbasierte Maßnahmen, wie Verwendung von Klebstoffen oder Durchbrüchen oder Hinterschneidungen in der Metallkomponente, zur Verbesserung der Verbindung vorgesehen sind.

## Patentansprüche

1. Verfahren zur Herstellung eines Rohbauteils, insbesondere einer Fahrzeugrohkarosserie, umfassend mehrere Einzelbauteile, darunter wenigstens ein Kunststoff-Metall-Verbundbauteil mit einer ersten metallischen Bauteilkomponente und einer mit dieser kunststofffertigungstechnisch verbundenen zweiten Bauteilkomponente aus Kunststoff, in einem Rohbauprozess, **dadurch gekennzeichnet, dass** kunststoffspezifische Fertigungsschritte zur Herstellung des wenigstens einen Kunststoff-Metall-Verbundbauteils in den Rohbauprozess integriert sind.

2. Verfahren nach Anspruch 1, **dadurch gekennzeichnet, dass** es sich bei dem kunststoffspezifischen Fertigungsschritt um einen Spritzgieß- oder Pressvorgang handelt, bei welchem die erste Bauteilkomponente des Kunststoff-Metall-Verbundbauteils mit Kunststoff hinterspritzt oder hinterpresst wird.

3. Verfahren nach einem der Ansprüche 1 oder 2, **dadurch gekennzeichnet, dass** die Taktzeit der kunststoffspezifischen Fertigungsschritte mit der Taktzeit im Rohbauprozess abgestimmt ist.
